# DEMANDE DE BREVET EUROPEEN

(11) **EP 1 659 138 A2**
(43) Date de publication de la demande: **24.05.2006**
(21) Numéro de dépôt: 06075109.6
(22) Date de dépôt: 25.04.2000
(51) Int. Cl.: C08F 255/02, C08F 255/00, C08K 5/134, C09J 151/06, C09D 151/06

(54) **Compositions de polyoléfines, procédé pour leur préparations et utilisation de celles-ci**

(30) Priorité: 29.04.1999 BE 9900310
(62) Demande divisionnaire de: 00934964.8
(71) Demandeur: Innovene Manufacturing Belgium NV, 2040 Antwerpen (BE)
(72) Inventeur: Collard, Marie-Paule, 1800 Vilvoorde (BE); Wautier, Henri, 7090 Braine-le Comte (BE); Fassiau, Eric, 1800 Vilvoorde (BE); Vandevyver, Eric, 1200 Woluwe-Saint-Lambert (BE)
(74) Mandataire: Smith, Julian Philip Howard

(57) **Abrégé**

Compositions comprenant un ou plusieurs polymères d'oléfine fonctionnalisés par au moins un agent de fonctionnalisation choisi parmi les acides carboxyliques, leurs esters, leurs anhydrides et leurs sels métalliques et un ou plusieurs premiers agents stabilisants comportant un ou plusieurs groupements phénols stériquement encombrés et au plus une fonction ester, et un ou plusieurs deuxièmes agents stabilisants comportant un ou plusieurs groupements phénols stériquement encombrés et ne comprenant pas de fonction ester.

## Description

La présente invention concerne des compositions stabilisées de polyoléfines fonctionnalisées et notamment des compositions stabilisées de polyoléfines fonctionnalisées par des groupes acides carboxyliques, leurs esters, leurs anhydrides ou leurs sels métalliques. Elle concerne également un procédé pour leur préparation et leur utilisation.

Les polyoléfines fonctionnalisées sont largement utilisées, notamment comme adhésif entre une couche de polyéthylène (PE) et une couche en résine époxy, par exemple pour le revêtement de tubes. En pratique, tous les matériaux plastiques subissent des phénomènes d'oxydation, communément repris sous la terminologie "phénomène de vieillissement". Pour retarder ces phénomènes, la méthode la plus usitée est l'addition d'agents antioxydants ou stabilisants.

Pour les polyéthylènes, des antioxydants phénoliques sont utilisés comme stabilisant, cependant leur combinaison avec des stabilisants de type phosphites est généralement plus efficace, voir US 4,290,941. Une combinaison fréquemment utilisée est par exemple un mélange de pentaérythrityle tétrakis-(3,5-di-t-butyl-4-hydroxyphényl-propionate) et de tris-(2,4-di-t-butylphényl)phosphite.

Le problème qui se pose dans le cas d'adhésifs stabilisés de cette façon, à base de polyoléfines fonctionnalisées par des groupes acides ou anhydrides, par exemple du polyéthylène fonctionnalisé anhydride maléique, est une perte d'adhérence à long terme. De plus, ces compositions sont soumises à une perte de stabilité thermique et à une augmentation de la viscosité en présence d'humidité (perte de stabilité rhéologique), ce phénomène étant d'ailleurs accéléré par une augmentation de la température.

La présente invention vise à remédier à ces inconvénients par de nouvelles compositions de polyoléfines fonctionnalisées présentant une meilleure stabilité thermique, une meilleure stabilité rhéologique et offrant une meilleure adhérence à long terme.

Un aspect de la présente invention concerne par conséquent des compositions comprenant un ou plusieurs polymères d'oléfine fonctionnalisés par au moins un agent de fonctionnalisation choisis parmi les acides carboxyliques, leurs esters, leurs anhydrides et leurs sels métalliques et un ou plusieurs agents stabilisants comportant un ou plusieurs groupements phénols stériquement encombrés et au plus une fonction ester.

Ces compositions fonctionnalisées présentent une meilleure stabilité rhéologique et offrent une meilleure adhérence à long terme.

De plus, ces compositions ne sont plus soumises à une perte de stabilité thermique ni à une augmentation de la viscosité en présence d'humidité.

Les agents stabilisants comportant un ou plusieurs groupements phénols stériquement encombrés et au plus une fonction ester sont choisis parmi les agents stabilisants comportant un ou plusieurs groupements phénols stériquement encombrés et contenant une fonction ester et parmi les agents stabilisants comportant un ou plusieurs groupements phénols stériquement encombrés et ne contenant pas de fonction ester.

Par fonction ester, on entend désigner aux fins de la présente invention, la fonction ester dérivée de la fonction acide carboxylique au sens classique de la chimique organique (R-CO-O-R').

Parmi les agents stabilisants comportant un ou plusieurs groupements phénols stériquement encombrés et contenant une fonction ester, on peut citer par exemple le stéaryl-béta-(3,5-di-t-butyl-4-hydroxyphényl)-propionate. Parmi les agents stabilisants comportant un ou plusieurs groupements phénols stériquement encombrés et ne contenant pas de fonction ester, on peut citer par exemple le 1,1,3-tris(2-méthyl-4-hydroxy-5-t-butylphényl)butane, le 2,2'-isobutylidène-bis-(4,6-diméthylphénol), le 2,2'-méthylène-bis-(6-t-butyl-4-méthylphénol), le 2,6-bis-(alpha-méthylbenzyl)-4-méthylphénol, le 4,4'-thio-bis-6-(t-butyl-m-crésol), le 2,2'-méthylène-bis-(4-méthyl-6-nonylphénol), le diisobutylnonylphénol, le tris-(3,5-di-t-butyl-4-hydroxybenzyl)isocyanurate, le 1,3,5-tris-(4-t-butyl-3-hydroxy-2,6-diméthylbenzyl)-1,3,5-triazine-2,4,6-(1H,3H,5H)-trione, le 1,3,5-triméthyl-2,4,6-tris(3,5-di-t-butyl-4-hydroxy-benzyl)benzène, de même que leurs mélanges.

De préférence, au moins un des agents stabilisants ne contient pas de fonction ester. De manière particulièrement préférée, au moins un des agents stabilisant est le 1,3,5-triméthyl-2,4,6-tris(3,5-di-t-butyl-4-hydroxybenzyl)benzène (IRGANOX® 1330). De manière tout particulièrement préférée, les compositions selon l'invention comprennent à titre d'agent stabilisant unique, le 1,3,5-triméthyl-2,4,6-tris(3,5-di-t-butyl-4-hydroxy-benzyl)benzène.

Les quantités d'agent stabilisant mises en oeuvre dans les compositions de la présente invention dépendent de différents facteurs, par exemple de la quantité d'initiateur radicalaire utilisée, de l'application prévue pour les compositions et de la nature de l'agent de fonctionnalisation. La quantité d'agent stabilisant est comprise généralement entre 0,001 et 1 % en poids.

Généralement, la quantité d'agent stabilisant est supérieure ou égale à 0,001 %, de préférence supérieure ou égale à 0,01 %, de manière particulièrement préférée supérieure ou égale à 0,1 % en poids.

Généralement, la quantité d'agent stabilisant est inférieure ou égale à 1 %, de préférence inférieure ou égale à 0,75 %, de manière particulièrement préférée inférieure ou égale à 0,5 % en poids.

Les polymères d'oléfine fonctionnalisés par des agents de fonctionnalisation choisis parmi les acides carboxyliques, leurs esters, leurs anhydrides et leurs sels métalliques peuvent être obtenus par des techniques connues, par exemple par copolymérisation ou, de préférence, par greffage. Ils sont dérivés de polymères d'oléfines linéaires contenant de 2 à 8 atomes de carbone telles que l'éthylène, le propylène, le 1-butène, le 1-pentène, le 1-hexène et le 1-octène. Les oléfines linéaires contiennent de préférence de 2 à 6 atomes de carbone, plus particulièrement de 2 à 4 atomes de carbone.

Les polymères d'oléfine (polyoléfines) peuvent être sélectionnées parmi les homopolymères des oléfines précitées et parmi les copolymères de ces oléfines, en particulier des copolymères d'éthylène ou de propylène avec un ou plusieurs comonomères. Les comonomères constitutifs sont avantageusement choisis parmi les oléfines décrites ci-dessus et parmi les dioléfines comprenant de 4 à 18 atomes de carbone, telles que le 4-vinylcyclohexène le dicyclopentadiène, le méthylène- et l'éthylidène-norbornène, le 1,3-butadiène, l'isoprène et le 1,3-pentadiène.

De préférence, les polyoléfines sont choisies parmi les polymères du propylène et les polymères de l'éthylène, en particulier l'homopolymère de l'éthylène, l'homopolymère du propylène, les copolymères de l'éthylène, les copolymères du propylène, les copolymères d'éthylène et de propylène et leurs mélanges.

Les polymères du propylène sont le plus souvent choisis parmi les homopolymères et les copolymères du propylène dont l'indice de fluidité (MFI), mesuré à 230 °C, sous une charge de 2,16 kg selon la norme ASTM D 1238 (1986) est compris entre 0,1 et 100 dg/min.

Les polymères de l'éthylène sont le plus souvent choisis parmi les homopolymères et les copolymères de l'éthylène présentant une masse volumique standard comprise entre 915 et 960 kg/m³ et un indice de fluidité (mesuré à 190 °C sous une charge de 5 kg) compris entre 0,1 et 200 dg/min.

Les homopolymères et copolymères de l'éthylène sont particulièrement préférés. Ceux-ci présentent avantageusement une masse volumique standard d'au moins 915 kg/m³, en particulier d'au moins 936 kg/m³. La masse volumique standard ne dépasse pas, en général, 960 kg/m³, de préférence pas 953 kg/m³. Les homopolymères et copolymères de l'éthylène présentent en outre habituellement un indice de fluidité (mesuré à 190 °C sous une charge de 5 kg) d'au moins 0,1 dg/min, de préférence d'au moins 2 dg/min. L'indice de fluidité ne dépasse pas, le plus souvent, 200 dg/min, plus particulièrement pas 40 dg/min.

L'agent de fonctionnalisation est en général un composé comprenant une insaturation vinylique et éventuellement un ou plusieurs noyaux aromatiques et/ou un ou plusieurs groupements carbonyle. L'agent de fonctionnalisation peut par exemple être choisi parmi les acides insaturés mono- ou dicarboxyliques et leurs dérivés, les anhydrides insaturés d'acide mono- ou dicarboxyliques et leurs dérivés, les esters insaturés d'acide mono- ou dicarboxyliques et leurs dérivés, les sels métalliques d'acide mono- ou dicarboxyliques et leurs dérivés. Les agents de fonctionnalisation comprennent de préférence de 3 à 20 atomes de carbone. On peut citer comme exemples typiques l'acide acrylique, l'acide méthacrylique, l'acide maléique, l'acide fumarique, l'acide itaconique, l'acide crotonique, l'acide citraconique, l'anhydride maléique, l'anhydride itaconique, l'anhydride crotonique, l'anhydride citraconique et leur mélanges. On préfère tout particulièrement l'anhydride maléique.

D'une manière particulièrement préférée, dans les compositions selon l'invention, au moins un des polymères d'oléfine fonctionnalisés par au moins un agent de fonctionnalisation choisi parmi les acides carboxyliques, leurs esters, leurs anhydrides et leurs sels métalliques est un polymère d'éthylène fonctionnalisé par de l'anhydride maléique.

D'une manière tout particulièrement préférée, dans les compositions selon l'invention, le seul polymère d'oléfine fonctionnalisé est un polymère d'éthylène fonctionnalisé par de l'anhydride maléique.

L'anhydride maléique est habituellement présent dans le polymère d'éthylène fonctionnalisé en une quantité de 0,001 à 5 % en poids, de préférence de 0,01 à 3 % en poids et en particulier de 0,05 à 1 % en poids.

Le polymère d'éthylène fonctionnalisé avec de l'anhydride maléique présente avantageusement une masse volumique standard d'au moins 915 kg/m³, en particulier d'au moins 936 kg/m³. La masse volumique standard ne dépasse pas, en général, 960 kg/m³, de préférence pas 953 kg/m³. Il présente en outre habituellement un indice de fluidité (mesuré à 190 °C sous une charge de 5 kg) d'au moins 0,1 dg/min, de préférence d'au moins 2 dg/min. L'indice de fluidité ne dépasse pas, le plus souvent, 50 dg/min, plus particulièrement pas 22 dg/min.

Les compositions selon l'invention peuvent éventuellement contenir en outre des additifs usuels des polyoléfines en une quantité allant jusqu'à 10 % en poids, tels que des antioxydants supplémentaires, des lubrifiants, des matières de charge, des colorants, des agents nucléants, des agents anti-UV, des agents antiacides, comme le stéarate de calcium, des agents de modification de la cristallinité, comme un copolymère d'éthylène et d'acrylate de n-butyle ou d'éthyle, des désactivateurs de métaux ou des agents antistatiques.

Une forme de réalisation de la présente invention prévoit la dilution des compositions décrites ci-dessus dans un ou plusieurs polymères d'oléfine non fonctionnalisés. Dans le cas des polymères d'oléfine non fonctionnalisés, il s'agit essentiellement des composés mentionnés précédemment ou de leurs mélanges. La composition peut être diluée jusqu'à 20 fois, c'est-à-dire en y ajoutant jusqu'à 95 % en poids d'au moins un polymère d'oléfine non fonctionnalisé, de préférence jusqu'à 10 fois, c'est-à-dire en y ajoutant jusqu'à 90 % en poids d'au moins un polymère d'oléfine non fonctionnalisé, de manière plus que préférée jusqu'à 5 fois, c'est-à-dire en y ajoutant jusqu'à 80 % en poids d'au moins un polymère d'oléfine non fonctionnalisé.

Les compositions selon l'invention peuvent être préparées par tout procédé comme notamment les procédés en solution, les procédés se déroulant dans un malaxeur par exemple un malaxeur BRABENDER® ou les procédés se déroulant en extrudeuse. De bons résultats sont habituellement obtenus si les compositions selon l'invention sont préparées au moyen du procédé selon l'invention.

L'invention concerne aussi l'utilisation d'un ou de plusieurs agents stabilisants comportant un ou plusieurs groupements phénols stériquement encombrés et au plus une fonction ester pour la stabilisation de polymères d'oléfine fonctionnalisés par au moins un agent de fonctionnalisation choisi parmi les acides choisi parmi les acides carboxyliques, leurs esters, leurs anhydrides et leurs sels métalliques.

Les agents stabilisants comportant un ou plusieurs groupements phénols stériquement encombrés et au plus une fonction ester utilisés pour la stabilisation sont ceux identifiés ci-dessus.

Les polymères d'oléfine que l'on peut stabiliser sont ceux identifiés ci-dessus.

L'invention concerne également un procédé de préparation de compositions stabilisées comprenant un ou plusieurs polymères d'oléfine fonctionnalisés et un ou plusieurs agents stabilisants, selon lequel on mélange en fondu dans une extrudeuse à vis, un ou plusieurs polymères d'oléfine, un ou plusieurs agents de fonctionnalisation, un ou plusieurs initiateurs radicalaires, un ou plusieurs agents stabilisants comportant un ou plusieurs groupements phénols stériquement encombrés et au plus une fonction ester, et éventuellement un ou plusieurs additifs.

Les agents stabilisants comportant un ou plusieurs groupements phénols stériquement encombrés et au plus une fonction ester pouvant être introduits dans l'extrudeuse sont ceux identifiés ci-dessus.

Un cas préféré est celui où au moins un des agents stabilisants introduit dans l'extrudeuse ne contient pas de fonction ester. Un cas tout particulièrement préféré est celui où au moins un des agents stabilisants introduit dans l'extrudeuse est le 1,3,5-triméthyl-2,4,6-tris(3,5-di-t-butyl-4-hydroxybenzyl)benzène.

Les agents stabilisants sont habituellement employés en une quantité comprise entre 0,001 et 1 % en poids, de préférence entre 0,01 et 0,75 % en poids et de manière particulièrement préférée entre 0,1 et 0,5 % en poids.

Ces polymères d'oléfine sont ceux identifiés ci-dessus.

Un procédé préféré est celui dans lequel au moins un des polymères d'oléfine introduit dans l'extrudeuse est un polymère d'éthylène présentant une masse volumique standard de 915 à 960 kg/m³ et un indice de fluidité, mesuré à 190 °C sous une charge de 5 kg, de 0,1 à 200 dg/min.

Les agents de fonctionnalisation pouvant être introduits dans l'extrudeuse sont choisis parmi les acides carboxyliques, leurs esters, leurs anhydrides et leurs sels métalliques et sont essentiellement ceux indiqués précédemment.

Une variante préférée du procédé est celle où au moins un des agents de fonctionnalisation introduit dans l'extrudeuse est l'anhydride maléique.

Une variante tout particulièrement préférée est celle ou le seul agent de fonctionnalisation introduit dans l'extrudeuse est l'anhydride maléique.

Ils sont généralement utilisés en une quantité de 0,001 à 20 % en poids, de préférence de 0,05 à 10 % en poids et en particulier de 0,01 à 5 % en poids.

La réaction de greffage dans le procédé selon l'invention a lieu sous l'effet d'un initiateur radicalaire. On utilise de préférence des peroxydes organiques à titre d'initiateur radicalaire. On peut citer comme exemples typiques le peroxyde de t-butylcumyle, le ?,?'-bis(t-butylperoxyisopropyl)benzène, le 3,5-bis(t-butylperoxy)-3,5-diméthyl-1,2-dioxolane, le peroxyde de di-t-butyle, le 2,5-diméthyl-2,5-di(t-butylperoxy)hexane, le p-menthane hydroperoxyde, le pinane hydroperoxyde, le diisopropylbenzène mono-?-hydroperoxyde, l'hydroperoxyde de cumène, le t-butylhydroperoxyde et leurs mélanges. L'initiateur radicalaire préféré est le 2,5-diméthyl-2,5-di(t-butylperoxy)hexane.

L'initiateur radicalaire est en général mis en oeuvre dans le procédé selon l'invention en une quantité suffisante pour permettre d'effectuer le greffage. La quantité est habituellement comprise entre 0,0001 % et 1 %, de préférence entre 0,001 et 0,5 %, de manière particulièrement préférée de 0,01 et 0,1 % en poids.

La température de mise en oeuvre du procédé est en général supérieure à la température de fusion et inférieure à la température de décomposition de la polyoléfine et de la polyoléfine fonctionnalisée, le cas échéant si possible à une température optimale pour l'initiateur radicalaire. Le procédé selon l'invention implique généralement des températures de mise en oeuvre dans la gamme de 120 °C à 290 °C, de préférence dans la gamme de 140 à 250 °C et d'une manière particulièrement préférée dans la gamme de 160 à 220 °C.

Au cours du procédé, on peut éventuellement introduire en outre à un moment quelconque par exemple jusqu'à 10 % en poids d'additifs usuels des polyoléfines, choisis parmi ceux cités ci-dessus.

Le procédé peut également prévoir la dilution de la composition dans un ou plusieurs polymères d'oléfine non fonctionnalisés. Les polymères d'oléfine non fonctionnalisés sont pour l'essentiel les composés mentionnés précédemment ou leurs mélanges. La composition peut être diluée jusqu'à 20 fois, c'est-à-dire en y ajoutant jusqu'à 95 % en poids d'au moins un polymère d'oléfine non fonctionnalisé, de préférence jusqu'à 10 fois, c'est-à-dire en y ajoutant jusqu'à 90 % en poids d'au moins un polymère d'oléfine non fonctionnalisé, de manière plus que préférée jusqu'à 5 fois, c'est-à-dire en y ajoutant jusqu'à 80 % en poids d'au moins un polymère d'oléfine non fonctionnalisé.

La dilution de la composition peut avoir lieu en continu dans l'extrudeuse à vis dans laquelle a lieu la préparation de la composition stabilisée. Elle peut également avoir lieu dans un dispositif séparé de la dite extrudeuse, par exemple dans une seconde extrudeuse, éventuellement après granulation de la composition stabilisée.

En général, l'ordre d'introduction des réactifs n'est pas critique. L'agent de fonctionnalisation, l'agent stabilisant et l'initiateur radicalaire peuvent être introduits en même temps ou indépendamment dans un ordre quelconque et éventuellement de manière fractionnée. L'agent stabilisant est de préférence introduit après l'agent de fonctionnalisation et l'initiateur radicalaire, de manière particulièrement préférée après la zone de réaction.

D'une manière tout particulièrement préférée, le procédé de préparation de compositions stabilisées selon l'invention comprend les étapes suivantes :
a) alimentation, sous une atmosphère d'azote, d'un ou de plusieurs polymères d'oléfine et de 0,001 à 20 % en poids, d'agent de fonctionnalisation, dans une extrudeuse à vis jumelées co-rotatives, équipée d'une série d'éléments de mélange associés à des pas gauches,
b) alimentation de 0,0001 à 1 % en poids d'un initiateur radicalaire, éventuellement dilué dans un ou plusieurs polymères d'oléfine ou éventuellement introduit par pulvérisation,
c) mélange d'un ou de plusieurs polymères d'oléfine fondus, de l'agent de fonctionnalisation et de l'initiateur radicalaire dans l'extrudeuse pendant une durée suffisante pour greffer au moins une partie de l'agent de fonctionnalisation sur le(s) polymère(s) d'oléfine fondu(s),
d) alimentation dans l'extrudeuse de 0,001 à 1 % en poids, d'agent stabilisant et éventuellement d'un ou de plusieurs autres additifs, éventuellement dilués dans un ou plusieurs polymères d'oléfine,
e) dévolatilisation des matières volatiles par une étape subséquente de dévolatilisation à l'air sec chaud dans une zone de décompression de l'extrudeuse,
f) dilution éventuelle par des polymères d'oléfine non fonctionnalisés,
g) évacuation de la composition finale.

Une extrudeuse à vis dans le sens de la présente invention comporte au moins les parties suivantes : une zone d'alimentation, une zone de réaction et, à sa sortie, une zone d'évacuation précédée d'une zone de compression, cette dernière forçant la masse fondue à passer au travers de la zone d'évacuation.

En pratique, toutes les étapes peuvent être réalisées dans une extrudeuse à vis, mono- ou bi-vis co-rotatives ou contra-rotatives, qui comporte en général, en plus des zones citées ci-dessus, facultativement, un ou plusieurs dispositifs d'alimentation en différé pour l'introduction séparée de la ou des polyoléfines, des agents de fonctionnalisation, de l'initiateur radicalaire et/ou de l'agent stabilisant, un ou plusieurs éléments de vis permettant la propagation de la matière à extruder, une ou plusieurs zone d'échauffement permettant la fusion des constituants et une ou plusieurs zones de dévolatilisation. Le cas échéant la composition peut encore être diluée dans une zone permettant l'introduction de polyoléfine non fonctionnalisée par un dispositif d'alimentation approprié. La zone d'évacuation peut en outre être suivie d'un dispositif de granulation.

Le procédé selon l'invention est avantageusement utilisé pour la préparation des compositions selon l'invention.

Finalement, un aspect supplémentaire prévoit l'utilisation des compositions conformes à la présente invention pour compatibiliser des polymères d'oléfine avec des polymères, des matières de charge et des substrats métalliques qui sont incompatibles avec les polymères d'oléfine.

Des polymères incompatibles sont par exemple les résines époxy, les résines fluorés et particulièrement le poly(fluorure de vinylidène), les polyamides et les polyesters.

De préférence, les compositions selon l'invention sont utilisées pour compatibiliser les polymères d'oléfine avec les résines époxy.

Des matières de charge incompatibles sont par exemple des fibres naturelles, comme le lin, le chanvre, la jute et la cellulose, ainsi que les fibres de verre, le verre, la silice, le talc, le carbonate de calcium et le noir de carbone. Des substrats métalliques sont par exemple l'acier ou l'aluminium.

Des utilisations préférées des compositions selon l'invention sont l'adhésion multicouche et le revêtement multicouche de tubes en acier.

Les exemples suivants servent à illustrer la présente invention sans pour autant en limiter la portée.

Les significations des notations employées, les unités exprimant les grandeurs mentionnées et les méthodes de mesure de ces grandeurs sont explicitées ci-dessous.

Masse volumique standard (MVS) de la polyoléfine exprimée en kg/m³, mesurée selon la norme ISO 1183 (1987)

L'indice de fluidité de la polyoléfine (MI₅) est déterminé à 190 °C sous une charge de 5 kg, filière 8/2 mm selon la norme ISO 1133 (1991).

La teneur en AM greffée est évaluée par spectroscopie IR. Deux films sont réalisés par échantillon et analysés directement après pressage puis après dégazage pendant 1 h à 120 °C sous vide afin d'éliminer, si nécessaire, l'anhydride libre résiduel. Le taux d'AM, mesuré par IR, est exprimé par le rapport entre l'absorbance du carbonyle (1785 cm⁻¹) et l'absorbance à 3610 cm⁻¹, caractéristique du PE. Le taux d'acide est exprimé par le rapport entre l'absorbance à 1715 cm⁻¹ et l'absorbance à 3610 cm⁻¹. Les valeurs obtenues sont converties en % en poids d'anhydride maléique greffé en exploitant une relation basée sur un étalonnage titrimétrique. L'anhydride maléique libre est décelé par les bandes caractéristiques à 895, 840 et/ou 700 cm⁻¹.

La stabilité thermique est déterminée par la mesure de la période d'induction sous oxygène à 210 °C selon la norme ASTM D 3895 (1992).

La force de pelage a été évaluée sur des plaquettes tricouches de 5 x 15 cm. Les plaquettes métalliques de 5 x 15 x 3 mm sont sablées au maximum 24 h avant le revêtement. A 200 °C, une couche de primer époxy de 100 µm environ est appliquée par poudrage électrostatique. La plaquette est placée dans un moule à cadre préalablement chauffé à 200 °C. Un film de la composition adhésive des exemples ci-dessous de 250 µm environ d'épaisseur est appliqué, puis une plaque de PE ELTEX® GTB 201 de 3 mm d'épaisseur environ. La force de pelage est alors mesurée selon la norme DIN 30670 (1991).

Dans les exemples qui suivent, la résine de base est la résine de polyéthylène ELTEX® PEHD A 4090 P de MI₅ 29 dg/min et de masse volumique standard 952 kg/m³. L'anhydride maléique (AM) est broyé. Le peroxyde est le 2,5-diméthyl-2,5-di(t-butylperoxy)hexane) (DHBP-PEROXYD CHEMIE). Après le greffage, les produits sont séchés à l'étuve à 80 °C, sous vide pendant 16 h pour éliminer l'AM libre.

### Exemple 1

Un échantillon de polyéthylène ELTEX® A 4090 P fonctionnalisé à l'anhydride maléique en absence de tout stabilisant, contenant 1 % d'anhydride maléique greffé et présentant un indice de fluidité de 6,6 dg/min avant et après hydrolyse, est mélangé sur un malaxeur BRABENDER® à 180 °C, 50 rotations par minutes, pendant 6 min, en présence de 3 dg/kg du stabilisant 1,3,5-triméthyl-2,4,6-tris(3,5-di-t-butyl-4-hydroxybenzyl) benzène (stabilisant A).

La moitié de l'échantillon est hydrolysée en présence de vapeur d'eau pendant 7 jours à 100 °C puis séchée sous vide une nuit à 85 °C.

Des mesures de fluidité et de stabilité thermique ont été réalisées sur les échantillons tels quels et sur les échantillons après hydrolyse. Les résultats de ces mesures sont récapitulés au tableau I.

### Exemple 2

On procède de la même manière qu'à l'exemple 1 sauf que le stabilisant mis en oeuvre est le stabilisant stéaryl-béta-(3,5-di-t-butyl-4-hydroxyphényl)-propionate (stabilisant B).

Les résultats des mesures de fluidité sont récapitulés au tableau I.

### Exemple 3 (comparatif)

On procède de la même manière qu'à l'exemple 1 sauf que le stabilisant mis en oeuvre est le stabilisant pentaérythrityl tétrakis-(3,5-di-t-butyl-4-hydroxyphénylpropionate) (stabilisant C).

Les résultat des mesures de fluidité et de stabilité thermique sont récapitulés au tableau I.

**Tableau I**

| composition | MI₅ sans hydrolyse, dg/min | MI₅ après hydrolyse, dg/min | Stabilité thermique sans hydrolyse, min | Stabilité thermique après hydrolyse, min |
|---|---|---|---|---|
| Exemple 1 | 7,1 | 6,4 | 18,8 | 15,4 |
| Exemple 2 | 7,2 | 6,1 | nd | nd |
| Exemple 3 (comparatif) | 7,2 | 0,1 | 18 | 0 |

| | | | | |
|---|---|---|---|---|
| nd = non déterminé | | | | |

De l'analyse des résultats, il apparaît que les compositions selon l'invention présentent une fluidité et une stabilité thermique constantes à long terme.

### Exemple 4

Un mélange de polyéthylène linéaire de haute densité (PEHD), commercialisé sous la marque ELTEX® A 4090 P, et d'anhydride maléique, à une teneur de 0,4 % en poids, est alimenté dans l'extrudeuse double vis co-rotative Krupp Werner & Pfleiderer ZSK58.

L'extrudeuse est aménagée de manière à ce qu'elle comprenne successivement les zones suivantes :
(1) Zone d'alimentation principale
(2) Zone d'échauffement pourvue d'un orifice d'alimentation
(3) Zone de réaction pourvue d'un orifice d'alimentation
(4) Zone de dégazage pour évacuer les matières volatiles
(5) Zone de compression
(6) Zone d'évacuation.

Le PEHD, mélangé à l'anhydride maléique est alimenté dans la zone d'alimentation principale, sous courant d'azote. Le peroxyde est alimenté dans la trémie principale au niveau de la zone d'alimentation à une teneur de 0,045 % en poids, sous forme de mélange maître avec le PEHD. Le stabilisant 1,3,5-triméthyl-2,4,6-tris(3,5-t-butyl-4-hydroxyphényl)benzène (Stabilisant A) est additionné dans la zone 3 à une teneur de 0,3 % en poids, dans un mélange maître PEHD/stabilisant concentré 10 fois.

Les autres conditions opératoires sont les suivantes :
Profil de température : 210 °C
Débit de 180 kg/h
Vitesse de vis : 300 tours par minute

Le polyéthylène fonctionnalisé contient 0,5 % en poids d'anhydride maléique et présente un indice de fluidité MI₅ de 20 dg/min ainsi qu'une stabilité thermique de 20 min.

La force de pelage a été évaluée comme décrit ci-dessus, sur l'échantillon tel quel et sur l'échantillon vieilli 15 jours à 80 °C dans l'eau. Les résultats des forces de pelage mesurées à 23 °C et 80 °C sont présentés au tableau II ci-dessous.

### Exemple 5 (comparatif)

On procède de la manière décrite à l'exemple 4, sauf que le stabilisant mis en oeuvre est le stabilisant pentaérythrityle tétrakis-(3,5-di-t-butyl-4-hydroxyphénylpropionate) (Stabilisant C), toutes les autres conditions étant identiques.

Les résultats de force de pelage mesurées à 23 °C et 80 °C sont présentés au tableau II ci-dessous.

**Tableau II**

| Composition | Force de pelage à 23 °C (N/50mm) | | Force de pelage à 80 °C (N/50mm) | |
|---|---|---|---|---|
| | 23 °C | 23 °C et vieillis 15 j à 80 °C dans l'eau | 80 °C | 80 °C et vieillis 15 j à 80 °C dans l'eau |
| Exemple 4 | 1150 | 1150 | 562 | 429 |
| Exemple 5 (comparatif) | 1200 | 195 | 550 | 100 |

De l'analyse de ces résultats, on peut constater que les compositions selon l'invention offrent une meilleure adhérence à long terme.

## Revendications

**1.** Compositions comprenant un ou plusieurs polymères d'oléfine fonctionnalisés par au moins un agent de fonctionnalisation choisi parmi les acides carboxyliques, leurs esters, leurs anhydrides et leurs sels métalliques et un ou plusieurs premiers agents stabilisants comportant un ou plusieurs groupements phénols stériquement encombrés et au plus une fonction ester, et un ou plusieurs deuxièmes agents stabilisants comportant un ou plusieurs groupements phénols stériquement encombrés et ne comprenant pas de fonction ester.

**2.** Compositions selon la revendication 1, **caractérisées en ce qu'**au moins un des deuxièmes agents stabilisants est le 1,3,5-triméthyl-2,4,6-tris(3,5-di-t-butyl-4-hydroxy-benzyl)benzène.

**3.** Compositions selon l'une quelconque des revendications 1 ou 2, **caractérisées en ce que** la quantité d'agent stabilisant est comprise entre 0,001 et 1 % en poids.

**4.** Compositions selon l'une quelconque des revendications 1 à 3, **caractérisées en ce qu'**au moins un des polymères d'oléfine fonctionnalisés par au moins un agent de fonctionnalisation choisi parmi les acides carboxyliques, leurs esters, leurs anhydrides et leurs sels métalliques est un polymère d'éthylène fonctionnalisé par de l'anhydride maléique.

**5.** Compositions selon la revendication 4, **caractérisées en ce que** l'anhydride maléique est présent dans le polymère d'éthylène fonctionnalisé en une quantité de 0,001 à 5 % en poids.

**6.** Compositions selon la revendication 4 ou 5, **caractérisées en ce que** le polymère d'éthylène fonctionnalisé par de l'anhydride maléique présente une masse volumique standard de 915 à 960 kg/m³ et un indice de fluidité, mesuré à 190 °C sous une charge de 5 kg, de 0,1 à 50 dg/min.

**7.** Compositions selon l'une quelconque des revendications 1 à 6, **caractérisées en ce que** la composition est diluée dans un ou plusieurs polymères d'oléfine non fonctionnalisés.

**8.** Utilisation d'un ou de plusieurs premiers agents stabilisants comportant un ou plusieurs groupements phénols stériquement encombrés et au plus une fonction ester, et un ou plusieurs deuxièmes agents stabilisants comportant un ou plusieurs groupements phénols stériquement encombrés et ne comprenant pas de fonction ester, pour la stabilisation de polymères d'oléfine fonctionnalisés par au moins un agent de fonctionnalisation choisi parmi les acides carboxyliques, leurs esters, leurs anhydrides et leurs sels métalliques.

**9.** Procédé de préparation de compositions stabilisées comprenant un ou plusieurs polymères d'oléfine fonctionnalisés et un ou plusieurs agents stabilisants, **caractérisé en ce qu'**on mélange en fondu dans une extrudeuse à vis, un ou plusieurs polymères d'oléfine, un ou plusieurs agents de fonctionnalisation, un ou plusieurs initiateurs radicalaires, un ou plusieurs agents premiers agents stabilisants comportant un ou plusieurs groupements phénols stériquement encombrés et au plus une fonction ester, et un ou plusieurs deuxièmes agents stabilisants comportant un ou plusieurs groupements phénols stériquement encombrés et ne comprenant pas de fonction ester,, et éventuellement un ou plusieurs additifs.

**10.** Procédé selon la revendication 9, **caractérisé en ce qu'**au moins un des deuxièmes agents stabilisants introduit dans l'extrudeuse est le 1,3,5-triméthyl-2,4,6-tris(3,5-di-t-butyl-4-hydroxybenzyl)benzène.

**11.** Procédé selon l'une quelconque des revendications 9 ou 10, **caractérisé en ce qu'**au moins un des polymères d'oléfine introduit dans l'extrudeuse est un polymère d'éthylène présentant une masse volumique standard de 915 à 960 kg/m³ et un indice de fluidité, mesuré à 190 °C sous une charge de 5 kg, de 0,1 à 200 dg/min.

**12.** Procédé selon l'une quelconque des revendications 9 à 11, **caractérisé en ce qu'**au moins un des agents de fonctionnalisation introduit dans l'extrudeuse est l'anhydride maléique.

**14.** Procédé selon l'une quelconque des revendications 9 à 12, **caractérisé en ce que** la température de mise en oeuvre se situe entre 120 °C et 290 °C.

**14.** Procédé selon l'une quelconque des revendications 9 à 13, **caractérisé en ce que** la composition stabilisée est diluée dans un ou plusieurs polymères d'oléfine non fonctionnalisés.

**15.** Utilisation de compositions selon l'une quelconque des revendications 1 à 7 ou obtenues par un procédé selon l'une quelconque des revendications 9 à 14 pour compatibiliser des polymères d'oléfine avec des polymères, des matières de charge et des substrats métalliques qui sont incompatibles avec les polymères d'oléfine.

**16.** Utilisation selon la revendication 15, **caractérisée en ce que** les polymères incompatibles sont des résines époxy.

**17.** Utilisation selon la revendication 15 ou 16 pour l'adhésion multicouche.

**18.** Utilisation selon l'une quelconque des revendications 15 à 17 pour le revêtement multicouche de tubes en acier.
